**Europäisches Patentamt**

**European Patent Office**

**Office européen des brevets**

(19)

(11) Numéro de publication: **0 133 105**
**B1**

(12) # FASCICULE DE BREVET EUROPEEN

(45) Date de publication du fascicule du brevet:
**28.01.87**

(51) Int. Cl.⁴: **B 60 G 17/04**

(21) Numéro de dépôt: **84401500.8**

(22) Date de dépôt: **17.07.84**

(54) Correcteur de hauteur électro-hydraulique pour véhicule automobile.

(30) Priorité: **27.07.83 FR 8312746**

(43) Date de publication de la demande:
**13.02.85 Bulletin 85/7**

(45) Mention de la délivrance du brevet:
**28.01.87 Bulletin 87/5**

(84) Etats contractants désignés:
**DE GB IT**

(56) Documents cités:
**EP - A - 0 039 573**
**FR - A - 947 124**
**US - A - 2 804 311**
**US - A - 3 233 909**
**US - A - 3 917 295**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Quin, Philippe Paul, 25, rue de Belfort, F-94300 Vincennes (FR)**

(74) Mandataire: **Boivin, Claude, 9, rue Edouard-Charton, F-78000 Versailles (FR)**

ACTORUM AG

## Description

La présente invention concerne un correcteur de hauteur électro-hydraulique pour véhicule automobile, du genre de ceux qui sont sensibles à la position de la partie suspendue du véhicule par rapport à la partie non suspendue et comprenant des moyens pour corriger en permanence la position instantanée de la partie suspendue par rapport à une position moyenne.

Les correcteurs de hauteur de ce genre comprennent en général un distributeur hydraulique comportant des conduits reliés l'un à une alimentation sous pression, un autre à des vérins de suspension et un autre à un circuit d'échappement, et des moyens permettant de relier entre eux ces différents conduits.

Le document US-A-3,917,295 montre un correcteur de hauteur de ce type, dans lequel le distributeur comporte deux tiroirs-vannes reliés chacun à un noyau d'un électro-aimant, interposés l'un dans un circuit reliant le conduit d'admission à un conduit d'échappement et l'autre dans un circuit reliant le conduit d'utilisation à un conduit d'échappement, et soumis à l'action de moyens élastiques de rappel. Maìs ce conducteur de hauteur peut présenter des à-coups de fonctionnement et risque de coincer.

L'invention a pour objet un correcteur de hauteur à distributeur qui évite ces inconvénients.

Le correcteur de hauteur selon l'invention est caractérisé en ce que les moyens élastiques tendent à rappeler le premier tiroir dans une position dans laquelle la communication entre l'admission et l'échappement est établie et le second tiroir dans une position dans laquelle la communication entre l'utilisation et l'échappement est coupée, et en ce qu'une soupape qui est soumise à l'action de moyens élastiques de rappel, est interposée dans un circuit reliant le conduit d'admission et le conduit d'utilisation.

Au repos, le conduit d'admission est relié au conduit d'échappement alors que le conduit d'utilisation en est isolé. Lorsque le premier électro-aimant est excité, le conduit d'admission est isolé du conduit d'échappement; la pression dans le conduit d'admission s'élève de sorte que la soupape s'ouvre et que le conduit d'admission est mis en communication avec le conduit d'utilisation. La partie suspendue du véhicule monte. De même, quand le second électro-aimant est excité, le conduit d'utilisation est mis en communication avec le conduit d'échappement et le véhicule baisse.

Dans un mode de réalisation avantageux de l'invention, le noyau de chaque électro-aimant est relié au tiroir correspondant par une liaison à mouvement perdu et les moyens élastiques de rappel agissent sur le noyau. Dans ces conditions, quand un électro-aimant est excité, son noyau commence à se déplacer, en comprimant partiellement ses moyens élastiques de rappel, prend de l'élan et entraîne ensuite le tiroir en exerçant un choc sur lui et en achevant de comprimer les moyens élastiques de rappel; ce choc décoince le tiroir si celui-ci était coincé.

Les moyens élastiques de rappel peuvent, par exemple prendre appui sur une coupelle qui est commandée par le noyau de l'électro-aimant et coopère avec une première butée solidaire du tiroir, une seconde butée solidaire de ce tiroir coopérant avec un élément fixe du distributeur de façon à limiter la course du tiroir et à maintenir au repos, un certain jeu entre l'extrémité dudit tiroir et le noyau de l'électro-aimant.

La première butée peut être constituée par une rondelle engagée dans une rainure du tiroir et mobile à l'intérieur de la coupelle. De même la seconde butée peut également être constituée par une rondelle engagée dans une rainure du tiroir et mobile à l'intérieur d'une chambre ménagée dans la partie fixe du distributeur.

On a décrit ci-après, à titre d'exemple non limitatif, un mode de réalisation d'un distributeur pour un correcteur de hauteur selon l'invention, avec référence au dessin annexé dans lequel:

la Figure 1 est une vue en coupe du distributeur;

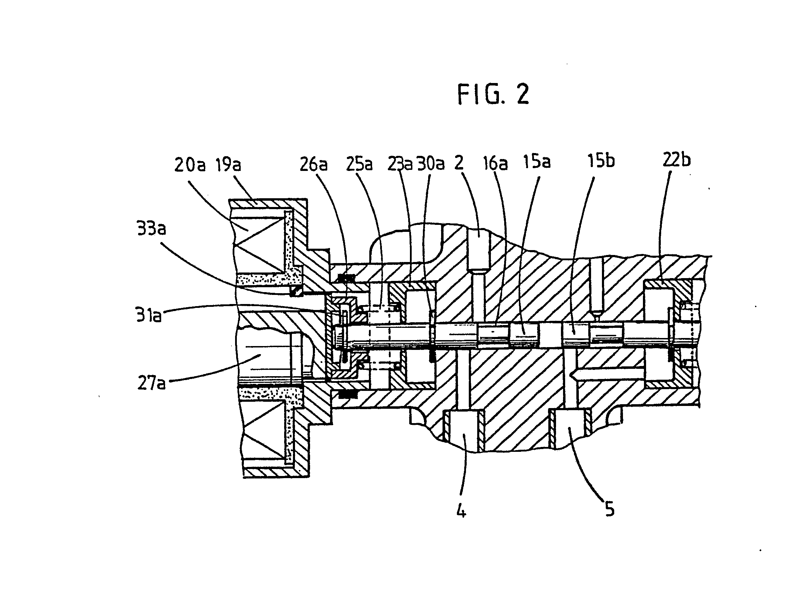

la Figure 2 est une vue en coupe d'un détail de ce distributeur, quand l'un des électro-aimants est excité.

Tel qu'il est représenté au dessin, le correcteur de hauteur selon l'invention comprend un corps 1 dans lequel sont percés un conduit d'admission 2 relié à une alimentation sous pression, un conduit d'utilisation 3 relié aux vérins de suspension du véhicule et deux conduits d'échappement 4 et 5. Les deux conduits 2 et 3 sont reliés par un conduit 6 qui comporte un siège 7 pour une bille 8 formant clapet; celle-ci est sollicitée vers son siège par un ressort 9 qui prend appui sur la face interne 10 d'un bouchon 11 monté dans le conduit grâce à des joints 12 et 13 et obturant l'orifice qui a servi à percer le conduit 6. La disposition est telle que, lorsque la pression dans le conduit 2 atteint une certaine valeur, la bille 8 s'écarte de son siège en permettant au liquide sous pression de passer du conduit d'admission 2 dans le conduit d'utilisation 3.

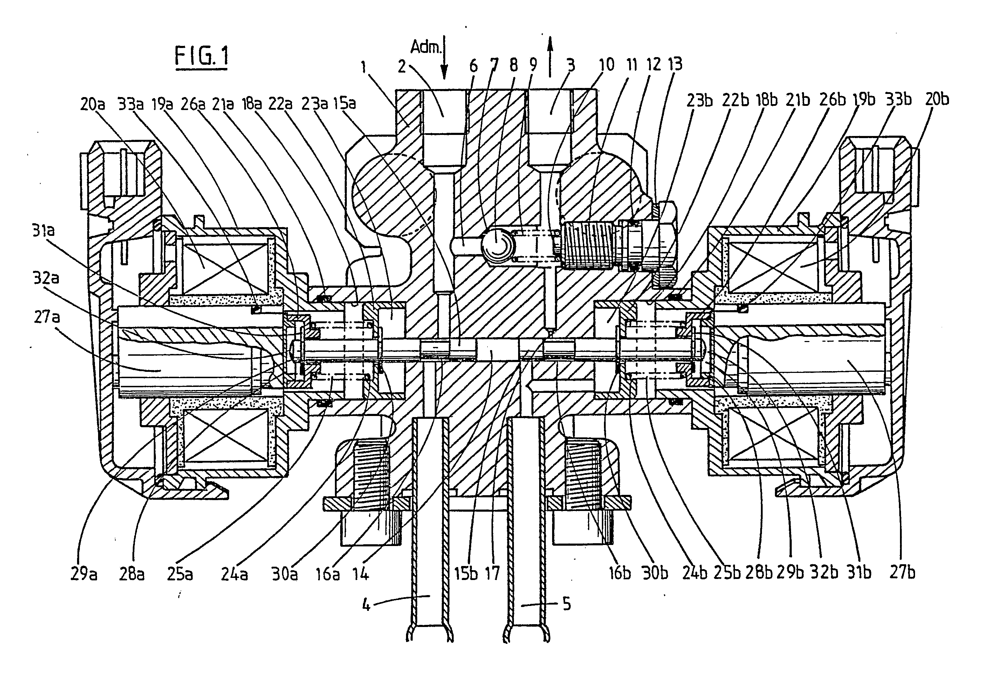

Un perçage transversal 14 relie d'une part le conduit d'admission 2 et le conduit d'échappement 4 et d'autre part le conduit d'utilisation 3 au conduit d'échappement 5. Dans ce perçage 14 sont montés coulissants deux tiroirs 15a et 15b qui comportent chacun une gorge 16a ou 16b à proximité de leur extrémité intérieure. Lorsque le tiroir 15a occupe sa position de repos, sa gorge 16a se trouve simultanément en regard des conduits 2 et 4 de sorte que l'admission est reliée à l'échappement; cette communication est coupée si le tiroir est déplacé cers le milieu du corps 1, c'est-à-dire de la gauche vers la droite à la Figure 1. Au contraire, lorsque le tiroir 15b occupe sa position de repos, sa gorge 16b est écartée du conduit 5, de sorte que l'utilisation est isolée de l'échappement; la communication est établie si le tiroir 15b est déplacé vers le milieu du corps 1, c'est-à-dire de la droite vers la gauche à la Figure 1. Un étranglement 17 est prévu dans le conduit d'utilisation 3, en amont du perçage 14, pour limiter le débit quand le conduit d'admission 2 est relié au conduit d'échappement 5.

Le corps 1 du correcteur comporte deux alésages 18a et 18b dans lesquels débouche le perçage 14 et dans lesquels s'étendent les tiroirs 15a et 15b. Les corps 19a et 19b de deux électro-aimants 20a et 20b sont engagés respectivement dans les alésages 18a et 18b, l'étanchéité étant assurée par un joint 21a ou 21b. Les électro-aimants 20a et 20b commandent respectivement les tiroirs 15a et 15b. Cette commande est assurée de manière analogue; aussi, ne sera-t-il décrit ci-après que la commande du tiroir 15a, les léléments correspondants pour le tiroir 15b portant au dessin l'indice b au lieu de l'indice a.

Une coupelle 22a est engagée dans l'alésage 18a; son évidement est tourné vers l'intérieur de l'alésage de manière à constituer une chambre fermée 23a. Le dos de la coupelle 22a comporte un évidement 24a qui sert d'appui à l'une des extrémités d'un ressort de rappel 25a. L'autre extrémité de ce ressort est en appui contre une coupelle 26a qui est elle-même en appui contre l'extrémité 28a du noyau 27a de l'électro-aimant 20a, qui délimite une chambre 29a avec la coupelle 26a. Le tiroir 15a traverse les coupelles 22a et 26a. Il porte à l'intérieur des chambres 23a et 29a deux butées 30 a et 31a constituées de rondelles engagées dans ces rainures du tiroir. Au repos, ces butées sont au contact des faces internes respectivement des coupelles 22a et 26a et un jeu 32a existe entre l'extrémité du tiroir 15a et l'extrémité 28a du noyau 27a.

La portion d'extrémité du noyau 27a de l'électro-aimant 20a est de section réduite et peut coulisser dans l'alésage 18a. Une bague élastique 33a en appui sur l'épaulement formé limite de déplacement du noyau 26a vers l'extérieur de l'électro-aimant 20a lorsque ce dernier est excité.

Le fonctionnement du correcteur de hauteur qui vient d'être décrit est le suivant.

Quand le véhicule est en position basse, le détecteur émet un signal qui excite l'électro-aimant 20a dont le noyau 27a est poussé vers l'extérieur de l'électro-aimant, c'est-à-dire vers l'intérieur du correcteur de hauteur. Le noyau 27a parcourt une première course d'élan en déplaçant la coupelle 26a et en comprimant partiellement le ressort 25a; puis le noyau 27a applique un choc au tiroir 15a et entraîne le tiroir et la coupelle en achevant de comprimer le ressort 25a. Le jeu 32a se retrouve alors entre la rondelle 31a et la coupelle 26a. La rondelle 30a est déplacée à l'intérieur de la chambre 23a. La course de l'ensemble formé du noyau 27a, de la coupelle 26a, du tiroir 15a et des deux rondelles 30a et 31a est terminée lorsque la bague 33a arrive en butée contre le corps 19a de l'électro-aimant 20a. La gorge 16a se déplace en fermant le circuit qui relie le conduit d'admission 2 et le conduit d'échappement 4. La pression monte dans le conduit d'admission et la bille 8 est repoussée à l'encontre du ressort 9, ce qui met en communication l'admission et l'utilisation. Les vérins de suspension sont alimentés en haute pression et font remonter la partie suspendue du véhicule.

Quand l'électro-aimant 20a est désexcité, le ressort de rappel 25a se détend en déplaçant d'abord uniquement la coupelle 26a jusqu'à atteindre la rondelle 31a en rattrapant le jeu; il continue ensuite sa course en entraînant le tiroir 15a et le jeu 32a, se retrouve entre l'extrémité du tiroir 15a et l'extrémité 28a du noyau 27a de l'électro-aimant. La rondelle 30a arrive en butée en même temps que ce noyau 27a. La gorge 16a retrouve sa place dans le circuit qui relie l'admission et l'échappement; la bille 8 repoussée par son ressort de rappel 9 s'applique sur son siège 7 et le circuit d'utilisation est isolé en position haute.

Si l'électro-aimant 20b est excité par le détecteur, un fonctionnement équivalent a pour effet d'ouvrir le circuit qui relie l'utilisation et l'échappement. La pression baisse lentement dans les vérins de suspension grâce à l'étranglement 17 et la partie suspendue du véhicule baisse de niveau jusqu'à ce que l'électro-aimant 20b soit désexcité.

## Revendications

1. Correcteur de hauteur électro-hydraulique pour véhicule automobile comprenant un distributeur hydraulique comportant des conduits reliés l'un à une alimentation sous pression, un autre à des vérins de suspension et un autre à un circuit d'échappement et deux tiroirs-vannes (15a ou 15b) reliés chacun au noyau (27a ou 27b) d'un électro-aimant (20a ou 20b), interposés l'un dans le circuit reliant le conduit d'admission (2) à un conduit d'échappement (4) et l'autre dans le circuit reliant le conduit d'utilisation (3) à un conduit d'échappement (5), et soumis à l'action de moyens élastiques de rappel (25a-25b), et des moyens sensibles à la position de la partie suspendue du véhicule par rapport à la partie non suspendue de celui-ci, caractérisé en ce que des moyens élastiques tendent à rappeler le premier tiroir (15a) dans une position dans laquelle la communication entre l'admission et l'échappement est établie et le second tiroir dans une position dans laquelle la communication entre l'utilisation et l'échappement est coupée, et en ce qu'une soupape (8) qui est soumise à l'action de moyens élastiques de rappel (9) est interposée dans un circuit reliant le conduit d'admission (2) et le conduit d'utilisation (3).

2. Correcteur de hauteur selon la revendication 1, caractérisé en ce que le noyau (27a ou 27b) de chaque électro-aimant (20a ou 20b) est relié au tiroir correspondant (15a ou 15b) par une liaison à mouvement perdu et en ce que les moyens élastiques de rappel (25a ou 25b) agissent sur le noyau.

3. Correcteur de hauteur selon la revendication 2, caractérisé en ce que les moyens élastiques de rappel (25a ou 25b) prennent appui sur une coupelle (26a ou 26b) qui est commandée par le noyau (27a ou 27b) de l'électro-aimant et coopère avec une première butée (31a ou 31b) solidaire du tiroir (15a ou 15b), une seconde butée (30a ou 30b) solidaire de ce tiroir coopérant avec un élément fixe du distributeur de façon à limiter la course du tiroir et à maintenir au repos un certain jeu (32a ou 32b) entre l'extrémité dudit tiroir et le noyau de l'électro-aimant.

4. Correcteur de hauteur selon la revendication 3, caractérisé en ce que la première butée (31a ou 31b) est constituée par une rondelle engagée dans une rainure du tiroir et mobile à l'intérieur de la coupelle (26a ou 26b).

5. Correcteur de hauteur selon la revendication 3, caractérisé en ce que la seconde butée (30a ou 30b) est constituée par une rondelle ménagée dans une rainure du tiroir et mobile à l'intérieur d'une chambre (23a ou 23b) ménagée dans la partie fixe du distributeur.

6. Correcteur de hauteur selon la revendication 5, caractérisé en ce que la chambre (23a ou 23b) est délimitée par une coupelle (22a ou 22b) engagée dans un alésage (18a ou 18b) du corps (1) du distributeur.

## Patentansprüche

1. Elektro-hydraulischer Niveauausgleicher für Kraftfahrzeuge mit einem Hydraulik-Verteiler, der Leitungen aufweist, von denen eine an eine Druckquelle, eine zweite an die Radaufhängungen und eine weitere an einen Ausströmkreis und zwei Ventilschieber (15a oder 15b) angeschlossen sind, die jeder an den Kern (27a oder 27b) eines Elektromagneten (20a oder 20b) angeschlossen sind, wobei der eine Ventilschieber in dem die Zuführungsleitung (2) mit einer Ausströmleitung (4) verbindenden Kreis und der andere Ventilschieber in einem die Nutzleitung (3) mit einer weiteren Ausströmleitung (5) verbindenden Kreis liegen und unter dem Einfluss von elastischen Rückstellorganen (25a-25b) stehen, wobei Elemente vorgesehen sind, die auf die Position des aufgehängten Fahrzeugteiles relativ zu dem nicht aufgehängten Fahrzeugteil ansprechen, dadurch gekennzeichnet, dass elastische Einrichtungen bestrebt sind, den ersten Ventilschieber (12a) in eine Position, in der die Verbindung zwischen der Zuführungsleitung und der Ausströmleitung hergestellt wird, und den zweiten Schieber in eine Position zu verstellen, in der die Verbindung zwischen der Nutzleitung und der Ausströmleitung unterbrochen ist, und dass ein Ventilelement (8), das dem Einfluss elastischer Rückstellmittel (9) unterworfen ist, in eine Leitung zwischengeschaltet ist, die die Zuführungsleitung (2) und die Nutzleitung (3) miteinander verbindet.

2. Niveauausgleicher nach Anspruch 1, dadurch gekennzeichnet, dass der Kern (27a oder 27b) jedes Elektromagneten (20a oder 20b) mit dem zugeordneten Schieber (15a oder 15b) mittels einer Leerhub-Verbindung verbunden sind, und dass die elastischen Rückstellorgane (25a oder 25b) auf den jeweils zugeordneten Kern einwirken.

3. Niveauausgleicher nach Anspruch 2, dadurch gekennzeichnet, dass die elastischen Rückstellorgane (25a oder 25b) von einem schalenförmigen Stützkörper (26a oder 26b) abgestützt werden, der von dem Kern (27a oder 27b) des Elektromagneten gesteuert wird und mit einem ersten Anschlag (31a oder 31b) zusammenwirkt, der fest mit dem Schieber (15a oder 15b) verbunden ist, und dass ein zweiter Anschlag (30a oder 30b), der fest mit diesem Schieber verbunden ist, mit einem feststehenden Element des Verteilers zusammenwirkt, derart dass die Bewegungsbahn des Schiebers begrenzt wird und ein bestimmtes Spiel (32a oder 32b) zwischen dem äussersten Ende dieses Schiebers und dem Kern des Elektromagneten in Ruhe gehalten wird.

4. Niveauausgleicher nach Anspruch 3, dadurch gekennzeichnet, dass der erste Anschlag (31a oder 31b) aus einer Scheibe besteht, die in eine Nut des Schiebers eingesetzt ist und innerhalb des napfförmigen Stützkörpers (26a oder 26b) beweglich ist.

5. Niveauausgleicher nach Anspruch 3, dadurch gekennzeichnet, dass der zweite Anschlag (30a oder 30b) aus einer Scheibe besteht, die in eine Umfangsnut des Schiebers eingesetzt ist und im Inneren einer Kammer (23a oder 23b) beweglich ist, die in den feststehenden Teil des Verteilers eingearbeitet ist.

6. Niveauausgleicher nach Anspruch 5, dadurch gekennzeichnet, dass die Kammer (23a oder 23b) durch einen napfförmigen Körper (22a oder 22b) begrenzt ist, die in eine Bohrung (18a oder 18b) des Körpers (1) des Verteilers eingesetzt ist.

## Claims

1. Electrohydraulic height corrector for motor vehicles comprising a hydraulic distributor with ducts connected one to a pressurized supply, another to suspension actuating cylinders and another to an exhaust circuit and two slide valves (15a or 15b) each connected to the core (27a or 27b) of an electromagnet (20a or 20b), one being inserted in the circuit connecting the intake duct (2) to an exhaust duct (4) and the other in the circuit connecting the user duct (3) to an exhaust duct (5), and subjected to the action of resilient return means (25a-25b), and means responsive to the position of the suspended part of the vehicle with respect to the non suspended part thereof, characterized in that resilient means tend to urge the first slide valve (15a) into a position in which communication between the intake and exhaust is established and the second slide valve into a position in which communication between the user duct and the exhaust is interrupted, and in that a valve (8) which is subjected to the action of resilient return means (9) is inserted in a circuit connecting the intake duct (2) with the user duct (3).

2. Height corrector according to claim 1, characterized in that the core (27a or 27b) of each electromagnetic (20a or 20b) is connected to the corresponding slide valve (15a or 15b) by a lost motion connection and in that the resilient return means (25a or 25b) act on the core.

3. Height corrector according to claim 2, characterized in that the resilient return means (25a or 25b) bear on a cup (26a or 26b) which is controlled by the core (27a or 27b) of the electromagnet and cooperates with a first stop (31a or 31b) integral with the slide valve (15a or 15b), a second stop (30a or 30b) integral with this slide valve cooperating with a fixed element of the distributor so as to limit the travel of the slide valve and to maintain at rest a certain clearance (32a or 32b) between the end of said slide valve and the core of the electromagnet.

4. Height corrector according to claim 3, charac-

7 **0 133 105** 8

terized in that the first stop (31a or 31b) is formed by a washer engaged in a groove of the slide valve and movable inside the cup (26a or 26b).

5. Height corrector according to claim 3, characterized in that the second stop (30a or 30b) is formed by a washer formed in a groove of the slide valve and movable inside a chamber (23a or 23b) formed in the fixed part of the distributor.

6. Height corrector according to claim 5, characterized in that the chamber (23a or 23b) is defined by a cup (22a or 22b) engaged in a bore (18a or 18b) of the body (1) of the distributor.

FIG. 1

Adm.

0 133 105

# FIG. 2

0 133 105